# EUROPÄISCHE PATENTSCHRIFT

(11) **EP 3 235 639 B1**
(45) Veröffentlichungstag und Bekanntmachung des Hinweises auf die Patenterteilung: **17.04.2019**
(21) Anmeldenummer: 17159987.1
(22) Anmeldetag: 09.03.2017
(51) Int. Cl.: B32B 37/00

(54) **LAMINIERGERÄT**
LAMINATOR
LAMINOIR

(30) Priorität: 19.04.2016 DE 102016004615
(43) Veröffentlichungstag der Anmeldung: 25.10.2017
(73) Patentinhaber: Leitz ACCO Brands GmbH & Co KG, 70469 Stuttgart (DE)
(72) Erfinder: LEUTE, Kurt, 78176 Blumberg (DE); SCHNEIDER, Ulrich, 70563 Stuttgart (DE); SCHNEIDER, Thomas, 71229 Leonberg (DE)
(74) Vertreter: Patentanwälte Bregenzer und Reule Partnerschaftsgesellschaft mbB

(56) Entgegenhaltungen:
- EP-A2- 1 046 495
- EP-A2- 1 440 794
- DE-A1-102010 033 422
- DE-U1-202005 005 020
- US-B2- 7 771 553

## Beschreibung

Die Erfindung betrifft ein Laminiergerät gemäß Oberbegriff des Anspruchs 1.

Ein solches Laminiergerät ist beispielsweise aus der DE 10 2010 033 422 A1 bekannt und dient der Laminierung von Laminiergut (Blattgut und Kunststofffolie) zu einem Laminat, bei dem das Blattgut in der Kunststofffolie aufgenommen und mit dieser verbunden ist. In einem Gehäuse ist eine Laminiervorrichtung aufgenommen, die beheizte Laminierwalzen aufweist, von denen mindestens eine motorisch angetrieben wird. Das Gehäuse weist einen Einführschlitz für das Laminiergut und einen Auswurfschlitz für das Laminat auf, zwischen denen sich ein Durchlaufkanal erstreckt, den das Laminiergut bis zu den Laminierwalzen und das Laminat von den Laminierwalzen aus durchläuft. Beim Durchführen durch die Laminierwalzen wird das Laminiergut zum Laminat verschweißt. Vor dem Einführschlitz ist eine Einführfläche am Gehäuse angeordnet, auf der das Laminiergut vor dem Einführen in den Durchlaufkanal aufliegt. Die Einführfläche findet ihre Verlängerung in einer Auflagefläche an einer Frontklappe, die von ihrer den Einführschlitz freigebenden Laminierstellung in eine Schließstellung geschwenkt werden kann, in der sie den Einführschlitz verschließt. Beim Einführen des Laminierguts besteht immer die Schwierigkeit, das Blattgut in die Kunststofffolie so exakt einzulegen, dass es mittig platziert ist und die Folie rings um das Blattgut herum übersteht. Dies ist umso schwieriger, je größer das Format des Blattguts sowie der hierzu passenden Kunststofffolie ist.

Es ist daher Aufgabe der Erfindung, ein Laminiergerät der eingangs genannten Art derart weiterzubilden, dass ein besseres Laminierergebnis erzielt werden kann.

Diese Aufgabe wird erfindungsgemäß durch ein Laminiergerät mit den Merkmalen des Anspruchs 1 und als alternativ hierzu durch ein Laminiergerät mit den Merkmalen des Anspruchs 15 gelöst. Vorteilhafte Weiterbildungen der Erfindung sind Gegenstand der abhängigen Ansprüche.

Der Erfindung liegt der Gedanke zugrunde, durch getrenntes Auflegen der unteren Folienhälfte und des Blattguts auf getrennte Auflageflächen eine bessere Positionierung des Blattguts bezüglich der Kunststofffolie zu erzielen. Dies wird insbesondere dadurch erzielt, dass jede der Auflageflächen in ihrer Breite durch zwei sich im Abstand zueinander in einer zum Einführschlitz verlaufenden Förderrichtung erstreckende Seitenanschlagflächen begrenzt wird, die aus der jeweiligen Auflagefläche vorstehen. Beim Laminieren wird dann zunächst die untere Folienhälfte auf die Folienauflagefläche bzw. eine der Folienauflageflächen aufgelegt. Dann werden die Auflageelemente auf oder über der Folienauflagefläche positioniert, und auf deren Blattgutauflagefläche wird das Blattgut aufgelegt und zwischen den die Blattgutauflagefläche begrenzenden Seitenanschlagflächen positioniert. Wenn das Laminiergut durch den Einführschlitz in den Durchlaufkanal eingezogen wird, wird die auf der Folienauflagefläche aufliegende Folie unter den Auflageelementen durchgezogen und die Folienauflagefläche und die Blattgutauflagefläche bilden Führungen für die Folie bzw. das Blattgut, so dass diese nicht gegeneinander verrutschen können.

Zweckmäßig weist das Gehäuse eine die mindestens eine Folienauflagefläche aufweisende Frontklappe auf, die zwischen einer Schließstellung, in der sie den Einführschlitz verschließt, und einer Laminierstellung, in der sie den Einführschlitz freigibt, um eine erste Schwenkachse verschwenkbar ist. Die Anordnung der Folienauflagefläche an der Frontklappe spart Platz, da letztere hochgeklappt werden kann, wenn das Laminiergerät nicht in Betrieb ist. Vorteilhaft sind in der Frontklappe herausschwenkbare Auflageleisten angeordnet, die eine Erweiterung der Folienauflagefläche bilden können und dann, wenn sie nicht benötigt werden, in die Frontklappe zurück verschwenkt werden können.

Es wird bevorzugt, dass die Auflageelemente schwenkbar mit der mindestens einen Folienauflagefläche verbunden sind, insbesondere dass sie an der Frontklappe angelenkt und um quer zur ersten Schwenkachse verlaufende zweite Schwenkachsen gegenüber der Frontklappe verschwenkbar sind. Sie sind dann fest mit der Frontklappe verbunden und können nicht verloren gehen, können aber jederzeit von der Folienauflagefläche abgenommen werden, um die Folie dort auflegen zu können.

Die Seitenanschlagflächen sind zweckmäßig bezüglich einer sich in der Förderrichtung erstreckenden Längsmittelebene symmetrisch angeordnet. Zudem wird bevorzugt, dass jeder Folienauflagefläche eine über ihr angeordnete Blattgutauflagefläche zugeordnet ist, deren Seitenanschlagflächen in geringerem Abstand zueinander angeordnet sind als die Seitenanschlagflächen der jeweiligen Folienauflagefläche. Dies erleichtert eine Positionierung des Blattguts über der Folie mit gleichzeitig seitlich überstehendem Folienrand. Insbesondere wird bevorzugt, dass zwei Folienauflageflächen für Kunststofffolien unterschiedlicher Größe vorgesehen sind, wobei sich eine erste der Folienauflageflächen zwischen zwei die zweite der Folienauflageflächen bildenden Teilflächen erstreckt. Die Breite der beiden Folienauflageflächen wird dabei zweckmäßig so gewählt, dass die erste Folienauflagefläche zum Laminieren von Blattgut des Formats DIN A4, die zweite Folienauflagefläche zum Laminieren von Blattgut der Größe DIN A3 geeignet ist. Zudem wird bevorzugt, dass zwei der Seitenanschlagflächen jeweils sowohl die erste Folienauflagefläche als auch eine der Teilflächen der zweiten Folienauflagefläche begrenzen, so dass zwischen der ersten Folienauflagefläche und jeder der beiden Teilflächen der zweiten Folienauflagefläche eine Stufe angeordnet ist. Wenn zwei Folienauflageflächen vorgesehen sind, so sind auch zwei Blattgutauflageflächen vorgesehen, die dann zweckmäßig wiederum durch zwei der Seitenanschlagflächen voneinander abgegrenzt sind so dass auch hier die Führung des Blattguts erleichternde Stufen vorhanden sind.

Zweckmäßig verringert sich die Höhe zumindest eines Teils der Seitenanschlagflächen in der zum Einführschlitz verlaufenden Förderrichtung, vorzugsweise bis auf Null. Zudem wird bevorzugt, dass sich die Höhe der Auflageelemente in der zum Einführschlitz verlaufenden Förderrichtung kontinuierlich verringert. Beide Maßnahmen erleichtern das Zusammenführen von Blattgut und Folie vor dem Einführschlitz.

Die alternative Lösung gemäß Anspruch 15, die idealerweise mit der Lösung gemäß Anspruch 1 kombiniert wird, sieht vor, dass in mindestens einer Folienauflagefläche Rollen angeordnet sind, die aus ihr vorstehen und um quer zur Förderrichtung angeordnete Drehachsen drehbar sind. Dies verringert die Reibung zwischen der Folie und der Folienauflagefläche und erleichtert den Einzug der Folie.

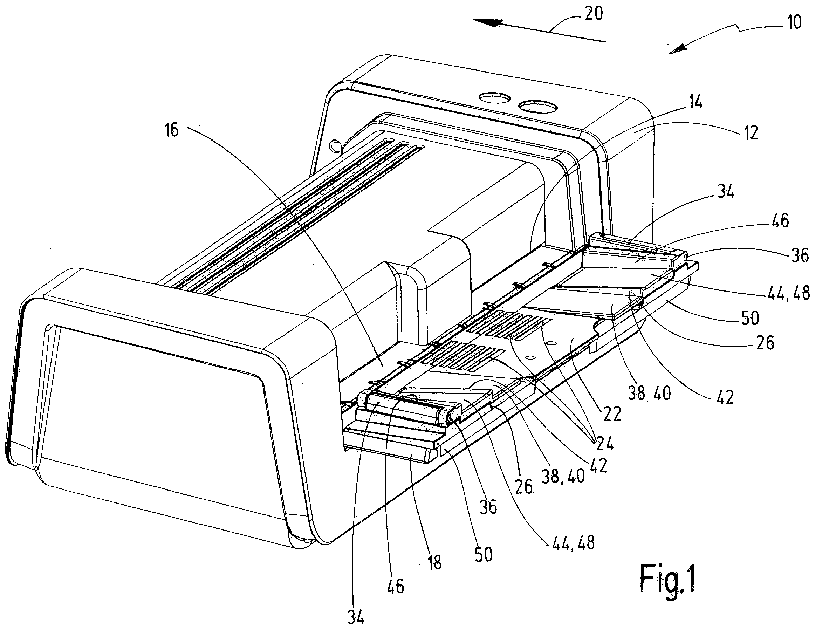

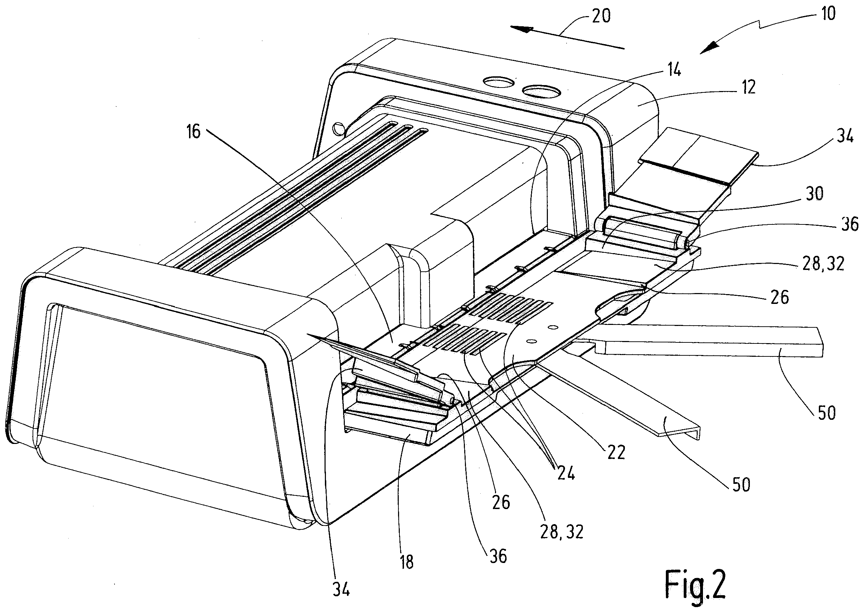

Im Folgenden wird die Erfindung anhand eines in der Zeichnung schematisch dargestellten Ausführungsbeispiels näher erläutert. Es zeigen
- Figur 1 und 2: ein Laminiergerät in perspektivischer Ansicht mit der Frontklappe in zwei unterschiedlichen Stellungen.

Das in der Zeichnung dargestellte Laminiergerät 10 weist ein Gehäuse 12 auf, in dem eine nicht näher dargestellte Laminiervorrichtung aufgenommen ist. Durch das Gehäuse 12 verläuft ein Durchlaufkanal von einem Einführschlitz 14 zu einem Auswurfschlitz, über den Laminiergut bestehend aus Blattgut und einer Kunststofffolie, der Laminiervorrichtung zugeführt wird, in der das Laminiergut zu einem Laminat verschweißt wird, wobei eine erste Folienhälfte die Unterseite und eine an einer Kante mit der ersten Folienhälfte verbundene zweite Folienhälfte die Oberseite des Blattguts bedeckt, Das Laminat wird dann durch den Auswurfschlitz aus dem Durchführkanal ausgeworfen. Vor dem Einführschlitz 14 ist eine Einführfläche 16 am Gehäuse 12 angeordnet, auf der das Laminiergut vor dem Einführen in den Einführschlitz 14 aufliegt. Im Bereich der Einführfläche 16 weist das Gehäuse 12 eine Frontklappe 18 auf, die um eine quer zu einer sich zum Einführschlitz 14 und durch den Durchlaufkanal zum Auswurfschlitz erstreckende Förderrichtung 20 verlaufende erste Schwenkachse von der in der Zeichnung dargestellten Laminierstellung, in der sie den Einführschlitz 14 freigibt, in eine Schließstellung verschwenkbar ist, in der sie den Einführschlitz 14 verschließt.

Die in der Laminierstellung nach oben weisende Oberfläche der Frontklappe 18 bildet eine erste Folienauflagefläche 22, in der Rollen 24 angeordnet sind, die ein Stück weit aus der ersten Folienauflagefläche 22 vorstehen und um quer zur Förderrichtung 20 verlaufende Drehachsen drehbar sind. Die Rollen 24 sind bezüglich einer sich in der Förderrichtung 20 erstreckenden Längsmittelebene des Laminiergeräts 10 symmetrisch in zwei Reihen angeordnet. Die erste Folienauflagefläche 22 wird seitlich durch symmetrisch bezüglich der Längsmittelebene verlaufende erste Seitenanschlagflächen 26 begrenzt, die die Breite der ersten Folienauflagefläche 22 festlegen und eine Stufe bilden. Von den ersten Seitenanschlagflächen 26 aus erstreckt sich jeweils eine Teilfläche 28 bis zu einer aus ihr nach oben vorstehenden zweiten Seitenanschlagfläche 30, wobei die zweiten Seitenanschlagflächen 30 wiederum bezüglich der Längsmittelebene symmetrisch zueinander angeordnet sind.

Die beiden Teilflächen 28 bilden zusammen eine zweite Folienauflagefläche 32, die für zu Blattgut der Größe DIN A3 passende Folien bestimmt ist, während die erste Folienauflagefläche 22 für zu Blattgut der Größe DIN A4 passende Folien bestimmt ist. An der Frontklappe 18 ist nahe jeder ihrer Schmalseiten ein Auflageelement 34 um eine quer zur ersten Schwenkachse verlaufende zweite Schwenkachse 36 verschwenkbar angelenkt. Die Auflageelemente 34 werden zum Laminieren über den Folienauflageflächen 22, 32 angeordnet und können zur Vorbereitung des Laminierens durch Verschwenken um die zweiten Schwenkachsen 36 von den Folienauflageflächen 22, 32 abgehoben werden, um auf letztere eine Kunststofffolie auflegen zu können. An der Oberseite der Auflageelemente 34 befindet sich eine erste Blattgutauflagefläche 38, die durch zwei Teilflächen 40 gebildet wird, wobei die eine Teilfläche 40 am einen Auflageelement 34 und die andere Teilfläche 40 am anderen Auflageelement 34 angeordnet ist. Nach außen hin wird die erste Blattgutauflagefläche 38 durch aus ihr nach oben vorstehende dritte Seitenanschlagflächen 42 begrenzt, von denen aus sich jeweils eine weitere Teilfläche 44 bis zu einer aus ihr nach oben vorstehenden vierten Seitenanschlagfläche 46 erstreckt. Die Teilflächen 44 bilden eine zweite Blattgutauflagefläche 48. Auch die dritten und vierten Seitenanschlagflächen 42, 46 sind paarweise symmetrisch bezüglich der Längsmittelebene angeordnet.

Die dritten Seitenanschlagflächen 42 sind in einem solchen Abstand zueinander angeordnet, dass zwischen ihnen auf die erste Blattgutauflagefläche 38 Blattgut der Größe DIN A4 aufgelegt werden kann, das mit geringem Spiel zwischen Ihnen geführt ist. Die vierten Seitenanschlagflächen 46 dagegen sind in einem solchen Abstand zueinander angeordnet, dass zwischen ihnen auf die zweite Blattgutauflagefläche 48 Blattgut der Größe DIN A3 aufgelegt werden kann und mit geringem Spiel geführt ist. Dementsprechend sind auch die Abstände der ersten Seitenanschlagflächen 26 und der zweiten Seitenanschlagflächen 30 gewählt. Zwischen erstere passt exakt die zum Blattgut der Größe DIN A4 passende Kunststofffolie, die auf die erste Folienauflagefläche 22 aufgelegt wird. Eine zu Blattgut der Größe DIN A3 passende Kunststofffolie passt exakt zwischen die zweiten Seitenanschlagflächen 30, zwischen denen sie auf die zweite Folienauflagefläche 32 aufgelegt wird.

Zur Vorbereitung des Laminiervorgangs werden die Auflageelemente 32 nach oben verschwenkt, wie in Fig. 2 gezeigt. Sodann wird die Kunststofffolie mit ihrer ersten Folienhälfte auf die entsprechende Folienauflagefläche 22, 32 aufgelegt. Anschließend werden die Auflageelemente 34 in die in Fig. 1 gezeigte Stellung zurück verschwenkt, bis sie über der ersten Folienhälfte angeordnet sind. In dieser Stellung wird das Blattgut auf die entsprechende Blattgutauflagefläche 38, 48 aufgelegt und dadurch exakt zur Kunststofffolie positioniert. Um ein gleichmäßiges Einführen des Laminierguts in den Einführschlitz zu erzielen, fluchtet die erste Folienauflagefläche 22 mit der Einführfläche 16. Die Höhe der ersten Seitenanschlagflächen 26 verringert sich in der Förderrichtung 20 kontinuierlich bis auf Null, so dass auch die zweite Folienauflagefläche 32 in ihrem Endbereich mit der Einführfläche 16 fluchtet. Ein Zusammenführen von Folie und Blattgut wird dadurch erleichtert, dass auch die Höhe der Auflageelemente 34 im Bereich der Blattgutauflageflächen 38, 48 sich in der Förderrichtung 20 verringert. Ebenso verringert sich die Höhe der dritten Seitenanschlagflächen 42 in der Förderrichtung 20 kontinuierlich bis auf Null.

Um zu vermeiden, dass über die Folienauflageflächen 22, 32 bzw. die Blattgutauflageflächen 38, 48 überstehendes Laminiergut von der Frontklappe 18 herunterhängt, sind in dieser zwei Auflageleisten 50 angeordnet, die, wie in Fig. 2 gezeigt, herausgeschwenkt werden können. Die Auflageleisten 50 sind dabei so miteinander verbunden, dass ein Herausschwenken der einen Auflageleiste 50 aus der Frontklappe 18 ein bezüglich der Längsmittelebene symmetrisches Herausschwenken der zweiten Auflageleiste 50 bewirkt.

Zusammenfassend ist folgendes festzuhalten: Die Erfindung betrifft ein Laminiergerät 10 mit einem Gehäuse 12, mit einer im Gehäuse 12 aufgenommenen Laminiervorrichtung zur Laminierung von Laminiergut aus Blattgut und Kunststofffolie zu einem Laminat und mit einem Durchlaufkanal zur Zuführung des Laminierguts zur Laminiervorrichtung und zum Abtransport des Laminats von der Laminiervorrichtung, wobei der Durchlaufkanal an einem Einführschlitz 14 im Gehäuse 12 beginnt und an einem Auswurfschlitz im Gehäuse 12 endet. Erfindungsgemäß ist vorgesehen, dass das Gehäuse 12 auf der Seite des Einführschlitzes 14 mindestens zwei in der Verlängerung des Durchlaufkanals befindliche Auflageflächen 22, 32, 38, 48 für das Laminiergut aufweist, wobei mindestens eine Blattgutauflagefläche 38, 48 für die Auflage von Blattgut durch die Oberflächen zweier im Abstand zueinander abnehmbar auf oder über mindestens einer Folienauflagefläche 22, 32 für die Auflage von Kunststofffolie angeordneter Auflageelemente 34 gebildet wird.

## Patentansprüche

1. Laminiergerät mit einem Gehäuse (12), mit einer im Gehäuse (12) aufgenommenen Laminiervorrichtung zur Laminierung von Laminiergut aus Blattgut und Kunststofffolie zu einem Laminat und mit einem Durchlaufkanal zur Zuführung des Laminierguts zur Laminiervorrichtung und zum Abtransport des Laminats von der Laminiervorrichtung, wobei der Durchlaufkanal an einem Einführschlitz (14) im Gehäuse (12) beginnt und an einem Auswurfschlitz im Gehäuse (12) endet, **dadurch gekennzeichnet, dass** das Gehäuse (12) auf der Seite des Einführschlitzes (14) mindestens zwei in der Verlängerung des Durchlaufkanals befindliche Auflageflächen (22, 32, 38, 48) für das Laminiergut aufweist, wobei mindestens eine Blattgutauflagefläche (38, 48) für die Auflage von Blattgut durch die Oberflächen (40, 44) zweier im Abstand zueinander abnehmbar auf oder über mindestens einer Folienauflagefläche (22, 32) für die Auflage von Kunststofffolie angeordneter Auflageelemente (34) gebildet wird.

2. Laminiergerät nach Anspruch 1, **dadurch gekennzeichnet, dass** das Gehäuse (12) eine die mindestens eine Folienauflagefläche (22, 32) aufweisende Frontklappe (18) aufweist, die zwischen einer Schließstellung, in der sie den Einführschlitz (14) verschließt, und einer Laminierstellung, in der sie den Einführschlitz (14) freigibt, um eine erste Schwenkachse verschwenkbar ist.

3. Laminiergerät nach Anspruch 2, **dadurch gekennzeichnet, dass** in der Frontklappe (18) herausschwenkbare Auflageleisten (50) angeordnet sind.

4. Laminiergerät nach einem der vorangehenden Ansprüche, **dadurch gekennzeichnet, dass** die Auflageelemente (34) schwenkbar mit der mindestens einen Folienauflagefläche (22, 32) verbunden sind.

5. Laminiergerät nach Anspruch 2 oder 3 und nach Anspruch 4, **dadurch gekennzeichnet, dass** die Auflageelemente (34) an der Frontklappe (18) angelenkt und um quer zur ersten Schwenkachse verlaufende zweite Schwenkachsen (36) gegenüber der Frontklappe (18) verschwenkbar sind.

6. Laminiergerät nach einem der vorangehenden Ansprüche, **dadurch gekennzeichnet, dass** jede der Auflageflächen (22, 32, 38, 48) in ihrer Breite durch zwei sich im Abstand zueinander in einer zum Einführschlitz (14) verlaufenden Förderrichtung (20) erstreckende, aus ihr vorstehende Seitenanschlagflächen (26, 30, 42, 46) begrenzt wird.

7. Laminiergerät nach Anspruch 6, **dadurch gekennzeichnet, dass** die Seitenanschlagflächen (26, 30, 42, 46) bezüglich einer sich in der Förderrichtung (20) erstreckenden Längsmittelebene symmetrisch angeordnet sind.

8. Laminiergerät nach Anspruch 6 oder 7, **dadurch gekennzeichnet, dass** jeder Folienauflagefläche (22, 32) eine über ihr angeordnete Blattgutauflagefläche (38, 48) zugeordnet ist, deren Seitenanschlagflächen (42, 46) in geringerem Abstand zueinander angeordnet sind als die Seitenanschlagflächen (26, 30) der jeweiligen Folienauflagefläche (22, 32).

9. Laminiergerät nach einem der vorangehenden Ansprüche, **dadurch gekennzeichnet, dass** zwei Folienauflageflächen (22, 32) für Kunststofffolien unterschiedlicher Größe vorgesehen sind, wobei sich eine erste der Folienauflageflächen (22) zwischen zwei die zweite der Folienauflageflächen (32) bildenden Teilflächen (28) erstreckt.

10. Laminiergerät nach Anspruch 9, **dadurch gekennzeichnet, dass** zwei der Seitenanschlagflächen (26) jeweils sowohl die erste Folienauflagefläche (22) als auch eine der Teilflächen (28) der zweiten Folienauflagefläche (32) begrenzen.

11. Laminiergerät nach Anspruch 9 oder 10, **dadurch gekennzeichnet, dass** zwei Blattgutauflageflächen (38, 48) vorgesehen sind, die durch zwei der Seitenanschlagflächen (42) voneinander abgegrenzt sind.

12. Laminiergerät nach Anspruch 10 oder 11, **dadurch gekennzeichnet, dass** sich die Höhe zumindest eines Teils der Seitenanschlagflächen (26, 42) in der zum Einführschlitz (14) verlaufenden Förderrichtung (20) kontinuierlich verringert, vorzugsweise auf Null.

13. Laminiergerät nach einem der vorangehenden Ansprüche, **dadurch gekennzeichnet, dass** sich die Höhe der Auflageelemente (34) im Bereich der Blattgutauflageflächen (38, 48) in der zum Einführschlitz (14) verlaufenden Förderrichtung (20) kontinuierlich verringert.

14. Laminiergerät nach einem der vorangehenden Ansprüche, **dadurch gekennzeichnet, dass** in mindestens einer Folienauflagefläche (22) Rollen (24) angeordnet sind, die aus ihr vorstehen und um quer zur zum Einführschlitz (14) verlaufenden Förderrichtung (20) angeordnete Drehachsen drehbar sind.

## Claims

1. Laminating apparatus with a housing (12), with a laminating device incorporated in the housing (12) for lamination of material to be laminated using sheet material and plastic film to form a laminate, and having a through-flow passage for feeding the material to be laminated into the laminating device and for transporting the laminate away from the laminating device, wherein the through-flow passage starts at an insertion slot (14) in the housing (12) and ends at an ejection slot in the housing (12), **characterised in that** the housing (12) on the side of the insertion slot (14) has at least two support surfaces (22, 32, 38, 48) located in the extension of the through-flow passage for the material to be laminated, wherein at least one sheet material support surface (38, 48) for the support of sheet material is formed by the surfaces (40, 44) of two support elements (34) which are arranged at a distance from one another in a removable manner on or above at least one film support surface (22, 32) for the support of plastic film.

2. Laminating apparatus according to claim 1, **characterised in that** the housing (12) has a front flap (18) which has at least one film support surface (22, 32) and can be pivoted about a first pivot axis between a closed position, in which it closes the insertion slot (14), and a laminating position, in which it releases the insertion slot (14).

3. Laminating apparatus according to claim 2, **characterised in that** support strips (50) which can be pivoted out, are arranged in the front flap (18).

4. Laminating apparatus according to one of the preceding claims, **characterised in that** the support elements (34) are pivotably connected to the at least one film support surface (22, 32).

5. Laminating apparatus according to claim 2 or 3 and according to claim 4, **characterised in that** the supporting elements (34) are articulated to the front flap (18) and are pivotable relative to the front flap (18) about second pivot axes (36) extending transversely to the first pivot axis.

6. Laminating apparatus according to one of the preceding claims, **characterised in that** the width of each of the support surfaces (22, 32, 38, 48) is delimited by two lateral stop surfaces (26, 30, 42, 46) extending at a distance from one another in a conveying direction (20) extending towards the insertion slot (14) and projecting therefrom.

7. Laminating apparatus according to claim 6, **characterised in that** the lateral stop surfaces (26, 30, 42, 46) are arranged symmetrically with respect to a longitudinal centre plane extending in the conveying direction (20).

8. Laminating apparatus according to claim 6 or 7, **characterised in that** each film support surface (22, 32) is assigned a sheet material support surface (38, 48) which is arranged above it and whose lateral stop surfaces (42, 46) are arranged at a smaller distance from one another than the lateral stop surfaces (26, 30) of the respective film support surface (22, 32).

9. Laminating apparatus according to one of the preceding claims, **characterised in that** two film support surfaces (22, 32) are provided for plastic films of different size, where a first of the film support surfaces (22) extends between two partial surfaces (28) forming the second of the film support surfaces (32).

10. Laminating apparatus according to claim 9, **characterised in that** two of the lateral stop surfaces (26) each delimit both the first film support surface (22) and one of the partial surfaces (28) of the second film support surface (32).

11. Laminating apparatus according to claim 9 or 10, **characterised in that** two sheet material support surfaces (38, 48) are provided which are delimited from one another by two of the lateral stop surfaces (42).

12. Laminating apparatus according to claim 10 or 11, **characterised in that** the height of at least part of the lateral stop surfaces (26, 42) is continuously reduced, preferably to zero, in the conveying direction (20) running to the insertion slot (14).

13. Laminating apparatus according to one of the preceding claims, **characterised in that** the height of the support elements (34) in the region of the sheet material support surfaces (38, 48) is continuously reduced in the conveying direction (20) running to the insertion slot (14).

14. Laminating apparatus according to one of the preceding claims, **characterised in that** rollers (24) are arranged in at least one film support surface (22), which project from it and are rotatable about axes of rotation arranged transversely to the conveying direction (20) running to the insertion slot (14).

## Revendications

1. Plastifieuse comprenant un boîtier (12) ; un dispositif de plastification logé dans ledit boîtier (12) et dévolu à la stratification d'un film de matière plastique et d'un matériau à plastifier, constitué de feuilles, afin d'obtenir un article plastifié ; et un canal de passage réalisé pour délivrer le matériau à plastifier au dispositif de plastification, et pour évacuer l'article plastifié depuis ledit dispositif de plastification, lequel canal de passage débute au niveau d'une fente d'introduction (14) pratiquée dans le boîtier (12), et s'achève au niveau d'une fente d'éjection pratiquée dans ledit boîtier (12), **caractérisée par le fait que** le boîtier (12) est muni, du côté de la fente d'introduction (14), d'au moins deux surfaces d'appui (22, 32, 38, 48) dédiées au matériau à plastifier et situées dans le prolongement du canal de passage, sachant qu'au moins une surface (38, 48), procurant un appui au matériau en feuilles, est formée par les surfaces (40, 44) de deux éléments d'appui (34) qui peuvent être enlevés, avec espacement mutuel, et sont disposés sur ou au-dessus d'au moins une surface (22, 32) conférant un appui à du film de matière plastique.

2. Plastifieuse selon la revendication 1, **caractérisée par le fait que** le boîtier (12) est pourvu d'un volet frontal (18) qui comporte la surface (22, 32) à présence minimale, conférant un appui à du film, et qui peut pivoter, autour d'un premier axe de pivotement, entre une position de fermeture dans laquelle il occulte la fente d'introduction (14), et une position de plastification dans laquelle il libère ladite fente d'introduction (14).

3. Plastifieuse selon la revendication 2, **caractérisée par le fait que** des barrettes d'appui (50), pouvant être sorties par pivotement, sont intégrées dans le volet frontal (18).

4. Plastifieuse selon l'une des revendications précédentes, **caractérisée par le fait que** les éléments d'appui (34) sont reliés, avec faculté de pivotement, à la surface (22, 32) à présence minimale qui confère un appui à du film.

5. Plastifieuse selon la revendication 2 ou 3, et selon la revendication 4, **caractérisée par le fait que** les éléments d'appui (34) sont articulés sur le volet frontal (18) et peuvent pivoter, relatif au dudit volet frontal (18), autour de seconds axes de pivotement (36) s'étendant transversalement par rapport au premier axe de pivotement.

6. Plastifieuse selon l'une des revendications précédentes, **caractérisée par le fait que** chacune des surfaces d'appui (22, 32, 38, 48) est délimitée, dans le sens de sa largeur, par deux surfaces (26, 30, 42, 46) de venue en butée latérale qui s'étendent, à distance l'une de l'autre, dans une direction de convoyage (20) pointant vers la fente d'introduction (14), et qui font saillie à partir de ladite surface.

7. Plastifieuse selon la revendication 6, **caractérisée par le fait que** les surfaces (26, 30, 42, 46) de venue en butée latérale sont disposées symétriquement par rapport à un plan médian longitudinal s'étendant dans la direction de convoyage (20).

8. Plastifieuse selon la revendication 6 ou 7, **caractérisée par** l'association, à chaque surface (22, 32) conférant un appui à du film, d'une surface (38, 48) qui procure un appui au matériau en feuilles et dont les surfaces (42, 46) de venue en butée latérale sont espacées, l'une de l'autre, d'une plus faible distance que les surfaces (26, 30) de venue en butée latérale de la surface considérée (22, 32) conférant un appui à du film.

9. Plastifieuse selon l'une des revendications précédentes, **caractérisée par le fait que** deux surfaces (22, 32) sont prévues pour conférer un appui à des films de matière plastique de tailles différentes, sachant qu'une première surface (22), au sein des surfaces conférant un appui aux films, s'étend entre deux surfaces partielles (28) formant la seconde surface (32) au sein desdites surfaces conférant un appui auxdits films.

10. Plastifieuse selon la revendication 9, **caractérisée par le fait que** deux surfaces (26) au sein des surfaces de venue en butée latérale délimitent, à chaque fois, aussi bien la première surface (22) conférant un appui aux films, que l'une des surfaces partielles (28) de la seconde surface (32) conférant un appui auxdits films.

11. Plastifieuse selon la revendication 9 ou 10, **caractérisée par** la présence de deux surfaces (38, 48) procurant un appui au matériau en feuilles et démarquées, l'une par rapport à l'autre, par deux surfaces (42) au sein des surfaces de venue en butée latérale.

12. Plastifieuse selon la revendication 10 ou 11, **caractérisée par le fait que** la hauteur d'au moins une partie des surfaces (26, 42) de venue en butée latérale décroît continûment, de préférence jusqu'à zéro, dans la direction de convoyage (20) pointant vers la fente d'introduction (14).

13. Plastifieuse selon l'une des revendications précédentes, **caractérisée par le fait que** la hauteur des éléments d'appui (34) décroît continûment, dans la région des surfaces (38, 48) procurant un appui au matériau en feuilles, dans la direction de convoyage (20) pointant vers la fente d'introduction (14).

14. Plastifieuse selon l'une des revendications précédentes, **caractérisée par le fait que** des rouleaux (24), logés dans au moins une surface (22) conférant un appui aux films, font saillie au-delà de cette dernière et peuvent tourner autour d'axes de rotation disposés transversalement par rapport à la direction de convoyage (20) pointant vers la fente d'introduction (14).
